(19) Europäisches Patentamt
European Patent Office
Office européen des brevets

(11) **EP 2 177 824 B1**

(12) **EUROPEAN PATENT SPECIFICATION**

(45) Date of publication and mention
of the grant of the patent:
**22.06.2011  Bulletin 2011/25**

(51) Int Cl.:
***F21V 19/00*** *(2006.01)*     ***F21V 17/16*** *(2006.01)*

(21) Application number: **08166837.8**

(22) Date of filing: **16.10.2008**

(54) **A mounting arrangement for lighting devices, corresponding lighting device and method**

Montageanordnung für Beleuchtungsvorrichtungen, entsprechende Beleuchtungsvorrichtung und Verfahren

Agencement de montage pour dispositifs d'éclairage, dispositif d'éclairage correspondant et procédé

(84) Designated Contracting States:
**AT BE BG CH CY CZ DE DK EE ES FI FR GB GR HR HU IE IS IT LI LT LU LV MC MT NL NO PL PT RO SE SI SK TR**

(43) Date of publication of application:
**21.04.2010  Bulletin 2010/16**

(73) Proprietors:
• **OSRAM Gesellschaft mit beschränkter Haftung**
**81543 München (DE)**
• **OSRAM S.P.A. - SOCIETA' RIUNITE OSRAM EDISON CLERICI**
**20144 Milano (IT)**
Designated Contracting States:
**IT**

(72) Inventors:
• **Bizzotto, Alessandro**
**31033, Castelfranco Veneto (Treviso) (IT)**
• **Capeleto, Simone**
**35131, Padova (IT)**
• **Hacker, Christian**
**30880, Laatzen (DE)**
• **Scordino, Alessandro**
**30031, Dolo (Venezia) (IT)**

(74) Representative: **Bosotti, Luciano**
**Buzzi, Notaro & Antonielli d'Oulx**
**Via Maria Vittoria, 18**
**10123 Torino (IT)**

(56) References cited:
**EP-A- 1 710 495     EP-A- 1 950 491**
**DE-U1- 8 606 427**

## Description

<u>Field of the invention</u>

This disclosure relates to mounting arrangements for lighting devices.

More specifically, this disclosure was devised with specific attention paid to its possible use in lighting devices comprising at least one LED (Light Emitting Diode) module.

<u>Description of the related art</u>

Lighting devices comprising LED modules are increasingly used for lighting applications, such as for home environments. Such lighting devices are usually produced by assembling a plurality of components having different functions, such as a high power LED module (i.e. the light source), a Printed Circuit Board (PCB) containing e.g. an electronic driver for the LED module, optics, housing, and heat-sink if required.

A good thermal coupling between the LED module und the housing or the heat-sink is one of the key requirements in order to achieve a good thermal behavior of the LED module. In fact, in usual LED modules efficiency decreases for increasing operating temperature, because the forward voltage may decrease with increasing junction temperature. Moreover, the lifetime of the LED modules may be longer for lower operating temperatures, because aging usually depends strongly on the junction temperature.

A good mechanical contact between the LED module and the housing or the heat-sink is beneficial in order to achieve a good thermal coupling.

In some prior-art arrangements such thermal contact between the LED module and the housing or heat-sink is achieved by assembling the components with screws. Such screws fix and urge the PCB of the light source against the housing or heat-sink in order to ensure thermal contact. However, such arrangements may provide additional costs, because additional mechanical components (e.g. screws or washers) may be required, and a complex manual or automatic assembling process with its associated assembling time may be necessary.

More specifically, the present invention relates to a mounting arrangement according to the preamble of Claim 1, which is known, e.g. from EP-A-1 950 491. Documents DE 86 06 427 U1 and EP-A-1 710 495 may also be of interest for the instant invention.

<u>Object and summary of the invention</u>

The object of the invention is to provide a mounting arrangement for lighting devices, which may be produced and assembled with lower costs compared to prior art solutions.

According to the present invention, that object is achieved by means of an mounting arrangement having the features set forth in the claims that follows. The invention also relates to a corresponding device and a corresponding method.

The claims form an integral part of the disclosure of the invention as provided herein.

In an embodiment, the arrangement as described herein is an mounting arrangement for lighting device, which uses a minimum number of components, wherein some of the components may have multiple functions.

In an embodiment, a mounting arrangement is provided which, while not requiring any screws, still provides a stable mounting structure integrating optical and mechanical sub-systems, and can be assembled with an easy and fast assembling process.

In an embodiment, the mounting arrangement comprises a housing, a reflector, and a cover. These components can be used in connection with a light source, such as a LED module, and a driver PCB, which contains an electronic driver for the light source, to assemble a lighting device.

In an embodiment, the cover comprises two snap-in systems. The primary snap-in system ensures the mechanical and thermal coupling with the housing via a simple pressure insertion, avoiding any screws, and the secondary snap-in system holds the driver PCB.

In an embodiment, both the housing and the light source have no direct mechanical contact to the driver PCB.

In an embodiment, the light source is mounted on a PCB. In this case, the cover may perform a vertical pressure on the reflector, which in turn may push the PCB of the light source against the housing, providing thus the necessary thermal coupling without the need of any screws.

In an embodiment, the cover is made of a single piece of plastic and contains also optics, such as a lens. The choice of separate optics or a single unique cover may depend on the product requirements. For example, a separate lens might be more suitable if different optic versions or high quality optics have to be supported.

In an embodiment, a separate lens is provided, wherein the cover and the lens may be coupled.

In this way, no additional mechanical components are required for the connections between the components and the assembling process may be simplified and automated, thus reducing production time and costs.

Brief description of the annexed representations

The invention will now be described, by way of example only, with reference to the annexed representations, including four figures, numbered 1 to 4, which schematically show the components of the mounting arrangement described herein.

Detailed description of exemplary embodiments

In the following description, numerous specific details are given to provide a thorough understanding of embodiments. The embodiments can be practiced without one or more of the specific details, or with other methods, components, materials, etc. In other instances, well-known structures, materials, or operations are not shown or described in detail to avoid obscuring aspects of the embodiments.

Reference throughout this specification to "one embodiment" or "an embodiment" means that a particular feature, structure, or characteristic described in connection with the embodiment is included in at least one embodiment. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

The headings provided herein are for convenience only and do not interpret the scope or meaning of the embodiments.

The figures herein illustrate a mounting arrangement for a lighting source such as a LED lighting source L. The exemplary mounting arrangement illustrated herein comprises a housing H, a reflector R, and a cover 1.

In the embodiment shown, the housing H has a "distal" opening for emitting the light generated by the source L. The reflector R reflects light emitted by the light source L into the direction of the opening of the housing. The cover 1 is used to close the opening of the housing H, e.g. in order to protect the device or to fix an optic component, such as a lens, in the opening.

In the embodiment shown, the cover 1 comprises an optical component 14, such as a lens, and a support structure 10 for supporting the optical component 14 and retaining it in the opening of the housing.

In an embodiment, the cover is made of a single piece of plastic comprising both the optical component 14 and the support structure 10, which may result in lower production and assembly costs.

In an embodiment, the cover may include separate components, e.g. if different lenses are supported or if glass lenses are used.

The mounting arrangement illustrated herein can be used in connection with a light source and a driver PCB to produce a complete lighting device. No specific limitations are imposed on these components: for example, the light source may be a LED module mounted on an additional PCB, and no limitations exist as to the possible distribution of the electronic components between these circuits.

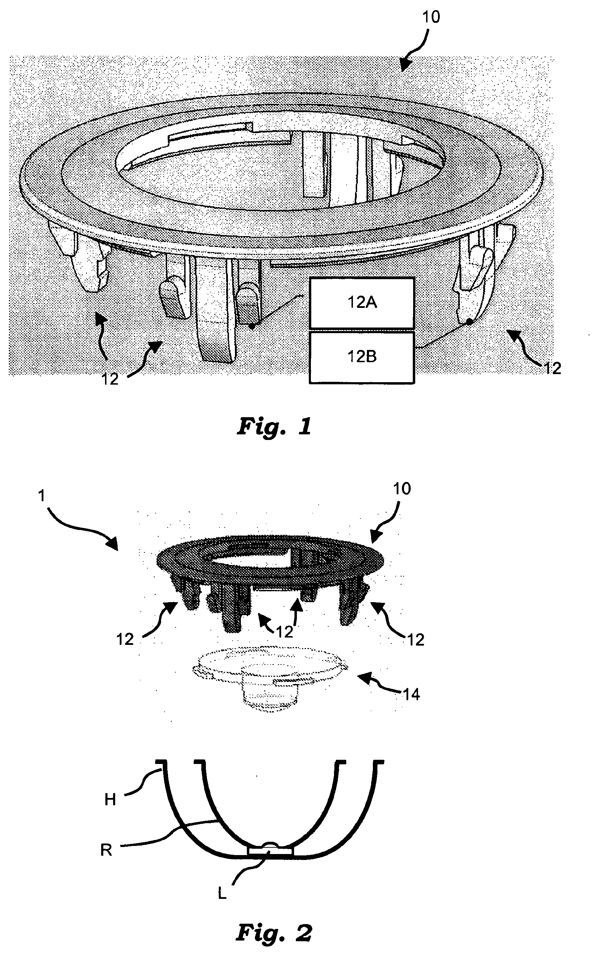

In the embodiment illustrated in Figure 1, the support structure 10 comprises a plurality of snap-in elements 12.

In an embodiment, the structure 10 comprises a first set of snap-in tongue elements 12A to retain the cover 10 against the housing H. The structure 10 also comprises a second set of snap-in formations 12B to hold a PCB, such as a driver PCB D, in a fixed vertical and axial position.

For example, the PCB may have a form ensuring that the PCB has no direct contact with the housing H, when the circuit D is supported by the snap-in tongue elements 12B. In this way, the PCB is thermally insulated from the housing (i.e. the heat-sink) that usually operates at high temperatures. The circuit may thus operate at lower temperature with improved reliability. Moreover, the PCB is also electrically insulated from the housing thus improving also the safety of the device.

In an embodiment, the snap-in elements 12A and 12B act as flexural springs and absorb possible production tolerances of the other parts of the mounting arrangement or the PCB circuits.

In an embodiment, the snap-in elements 12A and 12B are arranged in sets (to the number of four in the embodiment shown) angularly distributed - e.g. uniformly, at 90° from each other. Each set includes a relatively longer snap-in element 12B interposed between a pair of relatively shorter snap-in element 12A.

The distal end of the snap-in element 12B has a groove (or a similar retain formation for the driver PCB D) opening "inwardly" of the generally ring-shaped structure 10.

The distal end of each snap-in element 12A carries a hook-like formation pointing "outwardly" of the structure 10.

The elements 12A and 12B operate as flexural springs and absorb possible production tolerances of the other parts of the mounting arrangement or the PCB circuits.

Figure 2 shows a possible embodiment of a two-piece cover 1 including the support structure 10 described in the foregoing and an optical component 14, such as a lens.

In the exemplary embodiment, the support structure 10 and the optical component 14 exhibit complementary formations (e.g. cavities and/or protrusions) for coupling therebetween.

Figure 3 shows a 3D view of the assembled system, wherein a driver circuit D is mounted inside the lighting device by inserting the driver circuit D into the snap-in elements 12B.

The light source L can be e.g. a LED module mounted on an additional PCB at the bottom of the reflector R.

In an embodiment, the structure 10 exerts a vertical ("downward" with reference to the viewpoint of the figures) pressure on the reflector R, with in turn urges the light source (e.g. the PCB of the LED module) against the housing H, thus providing thermal coupling without the need of any screws.

In an embodiment, the housing comprises a heat-sink in the vicinity of the light source in order to improve heat transfer from the light source L. Moreover, thermal paste or e.g. a PCB with metal core may be used to improve the thermal coupling and heat dissipation.

The following description is exemplary of a desing approach which provides a good thermal coupling between the light source and the heat sink.

Experiments show that the following simple model applies to the thermal contact between the light source and the heat-sink:

$$R_{th} \ = \ R_{th\infty} \ + \ k \ F^2$$

where $R_{th}$ is the thermal resistance in °K, $F$ is the applied force in Newton, and $R_{th\infty}$ and $k$ are two constants. For example, in a typical application $R_{th\infty}$ may be 0.2 °K, and $k$ may be 60°K/N.

In an embodiment, the force $F$ is created by means of the snap-in elements 12A when the cover 1 is fixed to the housing H. For example, the "optimum" force $F_{opt}$ may be chosen according to application requirements based on a trade-off between mechanical complexity, material characteristics and thermal coupling requirements.

The mechanical design should ensure sufficient pressure for all operating conditions, including also worst case conditions, such as the highest admitted operating temperature.

Accordingly, applying a predetermined optimal force $F_{opt}$ the "optimum" thermal resistance is reached:

$$R_{th} \ = \ R_{th\infty} \ (1 \ + \ \delta)$$

where $\delta$ represents the relative deviation from the minimum resistance achievable, and has to be determined for the specific application.

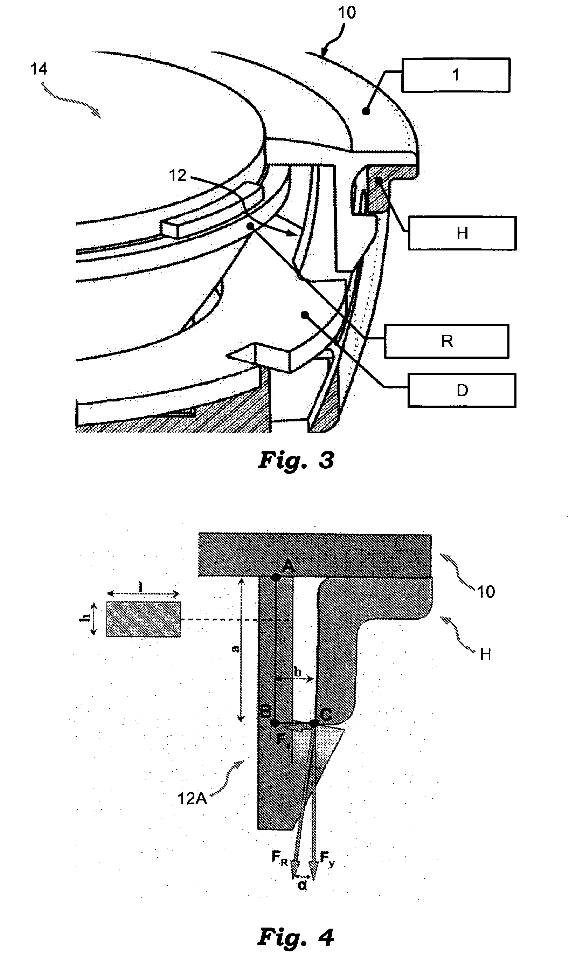

How such a force can be produced by a snap-in element such as the snap-in elements 12A considered will now be described with reference to the exemplary snap-in system shown in figure 4.

In this exemplary case, the upper surface of the snap-in elements 12A is angled and generates thus a vertical force $F_x$. Accordingly, the displacement of the snap 12A with respect to the snap-in system coupling point (point C in figure 4) has to be estimated in order to design a flexure which generates the required axial force $F_y$.

The required axial force of the single snap-in system can be calculated as:

$$F_y \ = \ F_{TOT} \ / \ n$$

where $F_{TOT}$ is the total required force, which is necessary to provide good thermal coupling, and $n$ is the number of snaps.

Moreover, the bending moment $M_f(y)$ may be calculated according to the relationship:

$$M_f(y) \ = \ F_y \ \cdot \ b \ + \ F_x \ \cdot \ a \ - \ F_x \ \cdot \ y$$

where a is the nominal distance between the cover and the snap-in system coupling point (e.g. the distance between points A and B in figure 4), b is the nominal distance of the snap from the snap-in system coupling point (e.g. the distance between points B and C in figure 4), and y is the vertical distance from the cover (e.g. the vertical distance from point A in figure 4).

The bending moment reaches its maximum for $y = 0$, i.e..

$$M_{f\ Max} = M_f(y=0) = F_y \cdot b + F_x \cdot a =$$
$$= F_y \cdot b + F_y \cdot a \cdot \tan(\alpha) =$$
$$= F_y \cdot [b + a \cdot \tan(\alpha)] =$$
$$= (F_{TOT} / n) \cdot [b + a \cdot \tan(\alpha)]$$

where $\alpha$ is the inclination of the surface of the snap 12A.

In an embodiment, the maximum bending moment $M_{fMAX}$ is used to calculate the flexural stress according to:

$$\sigma_f(y) = (b / 2) \cdot (M_f(y) / J_{xx})$$

where $J_{xx}$ is the second-order geometrical moment, which may be calculated according to:

$$J_{xx} = 1/12 \cdot 1 \cdot h^3$$

where 1 is the width of the snap and h is the thickness of the snap in horizontal direction.

The flexural stress reaches its maximum for $y = 0$, i.e.:

$$\sigma_{f\ Max} = \sigma_f(y=0) =$$
$$= b/2 \cdot F_{TOT}/(n \cdot J_{xx}) \cdot [b + a \cdot \tan(\alpha)]$$

In an embodiment, also the tensile stress generated by the vertical component $F_y$ is considered:

$$\sigma_N = F_y / (h \cdot 1) = F_{TOT} / (n \cdot h \cdot 1)$$

Thus the maximum total stress (at the coordinate $y = 0$) may be calculated as the combined stress:

$$\sigma_{TOT} = \sigma_{f\ Max} + \sigma_N$$

The total stress may then be compared with the admittable material characteristics to determine the required displacement $\mu(y)$, which is necessary to generate the required force:

$$\mu(y) = \frac{1}{E \cdot J_{xx}} \cdot \left[ F_y \cdot b \cdot \frac{y^2}{2} + F_x \cdot a \cdot \frac{y^2}{2} - F_x \cdot \frac{y^3}{6} \right]$$

where $E$ is Young's modulus.

For example, the displacement of point B in figure 4 (i.e. $y = a$) results in:

$$\mu_B \;=\; \frac{1}{E \cdot J_{xx}} \cdot \left[ F_y \cdot b \cdot \frac{a^2}{2} + F_x \cdot a \cdot \frac{a^2}{2} - F_x \cdot \frac{a^3}{6} \right]$$

$$\;=\; \frac{1}{E \cdot J_{xx}} \cdot \left[ F_y \cdot b \cdot \frac{a^2}{2} + F_x \cdot a \cdot \frac{a^2}{3} \right]$$

The required displacement $\mu_B$ may then be used to design the profile of the snap-in system.

Without prejudice to the underlying principles of the invention, the details and embodiments may vary, even significantly, with respect to what has been described herein merely by way of example, without departing from the scope of the invention as defined by the annexed claim.

**Claims**

1.  A mounting arrangement for a light source (L) having associated a Printed Circuit Board (D), wherein said mounting arrangement includes:

    - a housing (H) with an exit opening for light from said source (L),
    - a reflector (R) to reflect light from said source (L) towards said opening, and
    - an at least partly transparent cover (1) to close said opening of said housing (H), wherein said cover (1) includes a set of retaining elements (12A) for retaining said cover (1) to said housing (H), **characterized in that** said cover (1) includes a set of holding elements (12B) for holding said associated Printed Circuit Board (D) within said housing (H).

2.  The mounting arrangement of claim 1, wherein said cover (1) includes an optical component (14) and a support structure (10), and wherein said support structure (10) carries said retaining elements (12A) and said holding elements (12B).

3.  The mounting arrangement of claim 2, wherein said support structure (10) includes a ring-shaped structure.

4.  The mounting arrangement of claim 3, wherein said retaining elements (12A) and said holding elements (12B) are arranged in groups angularly distributed on said ring-shaped support structure (10).

5.  The mounting arrangement of claim 4, wherein each group of said retaining elements (12A) and said holding elements (12B) includes a relatively longer holding element (12B) interposed between a pair of relatively shorter retaining elements (12A).

6.  The mounting arrangement of any of claims 3 to 5, wherein each of said holding elements (12B) has a groove at the distal end opening inwardly of said ring-shaped support structure (10).

7.  The mounting arrangement of any of claims 3 to 6, wherein each of said retaining elements (12A) has at the distal end a hook-like formation pointing outwardly of said ring-shaped support structure (10).

8.  The mounting arrangement of any of claims 2 to 7, wherein said support structure (10) and said optical component (14) exhibit complementary formations for coupling therebetween.

9.  The mounting arrangement of any of claims 1 to 7, wherein said cover is a single piece of plastic.

10. The mounting arrangement of any of the previous claims, wherein said retaining elements (12A) and/or said holding elements (12B) are configured as flexural springs for absorbing possible production tolerances.

11. A lighting device, wherein said lighting device includes a light source (L) and said associated Printed Circuit Board (D) mounted in the mounting arrangement of any of claims 1 to 10, wherein said associated Printed Circuit Board (D) is mounted in said set of holding elements (12B) of said cover (1), and wherein said light source is mounted at the bottom of said reflector (R).

**12.** The lighting device of claim 11, wherein said cover (1) is configured to exert a pressure on said reflector (R) when said cover (1) is coupled to said housing (H) by means of said set of retaining elements (12A), and wherein said reflector (R) in turn urges said light source (L) against said housing (H), providing thus thermal coupling between said light source (L) and said housing (H).

**13.** The lighting device of either of claims 11 or 12, wherein said lighting source (L) is a LED module, and wherein said associated Printed Circuit Board (D) contains an electronic driver for said LED module.

**14.** The lighting device of claim 13, wherein said LED module is mounted on a Printed Circuit Board having a metal core in order to improve thermal coupling.

**15.** A method of providing a mounting arrangement for a light source (L) having associated a Printed Circuit Board (D), the method including:

- providing a housing (H) with an exit opening for light from said source (L),
- locating with said housing a reflector (R) to reflect light from said source (L) towards said opening,
- applying an at least partly transparent cover (1) to close said opening of said housing (H), and
- providing said cover (1) with a set of retaining elements (12A) for retaining said cover (1) to said housing (H),

**characterized in that** the method includes providing said cover (1) with a set of holding elements (12B) for holding said associated Printed Circuit Board (D) within said housing (H).


**Patentansprüche**

**1.** Eine Montageanordnung für eine Lichtquelle (L) mit einer zugeordneten gedruckten Leiterplatte (D), wobei die Montageanordnung aufweist:

- ein Gehäuse (H) mit einer Ausgangsöffnung für das Licht von der Quelle (L),
- einen Reflektor (R), um Licht von der Quelle (L) in Richtung der Öffnung zu reflektieren, und
- eine zumindest teilweise transparente Abdeckung (1), um die Öffnung des Gehäuses (H) zu verschließen, wobei die Abdeckung (1) einen Satz von Rückhalteelementen (12A) zum Zurückhalten der Abdeckung (1) an dem Gehäuse (H) aufweist,

**dadurch gekennzeichnet, dass** die Abdeckung (1) einen Satz Halteelemente (12B) zum Halten der zugeordneten gedruckten Leiterplatte (D) innerhalb des Gehäuses (H) aufweist.

**2.** Montageanordnung nach Anspruch 1, in welcher die Abdeckung (1) eine optische Komponente (14) und eine Stützstruktur (10) aufweist, und wobei die Stützstruktur (10) die Rückhalteelemente (12A) und die Halteelemente (12B) trägt.

**3.** Montageanordnung nach Anspruch 2, in welcher die Stützstruktur (10) eine ringförmige Struktur aufweist.

**4.** Montageanordnung nach Anspruch 3, in welcher die Rückhalteelemente (12A) und die Halteelemente (12B) in Gruppen anordnet sind, die winkelförmig auf der ringförmigen Stützstruktur (10) verteilt sind.

**5.** Montageanordnung nach Anspruch 4, in welcher jede Gruppe der Rückhalteelemente (12A) und der Halteelemente (12B) ein relativ langes Halteelement (12B) aufweist, welches zwischen einem Paar relativ kurzer Rückhalteelemente (12A) eingesetzt ist.

**6.** Montageanordnung nach irgendeinem der Ansprüche 3 bis 5, in welcher jedes der Halteelemente (12B) eine Nut an dem distalen Ende aufweist, die sich einwärts der ringförmigen Stützstruktur (10) öffnet.

**7.** Montageanordnung nach irgendeinem der Ansprüche 3 bis 6, in welcher jedes der Rückhalteelemente (12A) an dem distalen Ende eine hakenförmige Form aufweist, die auswärts der ringförmigen Stützstruktur (10) gerichtet ist.

**8.** Montageanordnung nach irgendeinem der Ansprüche 2 bis 7, in welcher die Stützstruktur (10) und die optische Komponente (14) komplementäre Ausbildungen zum dazwischen Koppeln aufweist.

9. Montageanordnung nach irgendeinem der Ansprüche 1 bis 7, in welcher die Abdeckung ein einziges Stück aus Kunststoff ist.

10. Montageanordnung nach irgendeinem der vorhergehenden Ansprüche, in welcher die Rückhalteelemente (12A) und/oder die Halteelemente (12B) als gebogene Federn zum Ausgleichen möglicher Produktionstoleranzen ausgebildet sind.

11. Eine Beleuchtungsvorrichtung, wobei die Beleuchtungsvorrichtung eine Lichtquelle (L) und eine zugeordnete gedruckte Leiterplatte (D) aufweist, die in der Montageanordnung nach irgendeinem der Ansprüche 1 bis 10 montiert ist, in welcher die zugeordnete gedruckte Leiterplatte (D) in dem Satz von Halteelementen (12B) auf der Abdeckung (1) befestigt ist, und in welcher die Lichtquelle auf dem Unterteil des Reflektors (R) montiert ist.

12. Beleuchtungsvorrichtung nach Anspruch 11, in welcher die Abdeckung (1) zum Ausüben eines Drucks auf den Reflektor (R) gestaltet ist, wenn die Abdeckung (1) an das Gehäuse (H) gekoppelt ist mittels des Satzes von Rückhalteelementen (12A), und in welcher der Reflektor (R) die Lichtquelle (L) gegen das Gehäuse (H) drängt und dabei eine thermische Kopplung zwischen der Lichtquelle (L) und dem Gehäuse (H) bereitstellt.

13. Beleuchtungsvorrichtung nach entweder Anspruch 11 oder 12, in welcher die Beleuchtungsquelle (L) ein LED-Modul ist, und in welcher die zugeordnete gedruckte Leiterplatte (D) einen elektronischen Treiber für das LED-Modul beinhaltet.

14. Beleuchtungsvorrichtung nach Anspruch 13, in welcher das LED-Modul auf der gedruckten Leiterplatte mit einem Metallkern montiert ist, um die thermische Kopplung zu verbessern.

15. Verfahren zur Bereitstellung einer Montageanordnung für eine Lichtquelle (L) mit einer zugeordneten gedruckten Leiterplatte (D), wobei das Verfahren aufweist:

   - Bereitstellen eines Gehäuses (H) mit einer Ausgangsöffnung für das Licht von der Quelle (L),
   - Anordnen eines Reflektors (R) mit dem Gehäuse, um Licht von der Quelle (L) in Richtung der Öffnung zu reflektieren,
   - Aufbringen einer zumindest teilweise transparenten Abdeckung (1), um die Öffnung des Gehäuses (H) zu verschließen, und
   - Bereitstellen einer Abdeckung (1) mit einem Satz Rückhalteelemente (12A) zum Zurückhalten der Abdeckung (1) auf dem Gehäuse (H),
   - **dadurch gekennzeichnet, dass** das Verfahren ein Bereitstellen der Abdeckung (1) mit einem Satz Halteelemente (12B) zum Halten der zugeordneten gedruckten Leiterplatte (D) innerhalb des Gehäuses (H) aufweist.

**Revendications**

1. Une configuration de montage pour une source lumineuse (L) à laquelle est associée une carte de circuit imprimé (D), où ladite configuration de montage comprend :

   - un boîtier (H) avec une ouverture de sortie pour de la lumière provenant de ladite source (L),
   - un réflecteur (R) pour réfléchir la lumière provenant de ladite source (L) en direction de ladite ouverture, et
   - un couvercle au moins partiellement transparent (1) pour fermer ladite ouverture dudit boîtier (H), où ledit couvercle (1) comprend un ensemble d'éléments de rétention (12A) pour retenir ledit couvercle (1) sur ledit boîtier (H),
   **caractérisée en ce que** ledit couvercle (1) comprend un ensemble d'éléments de maintien (12B) pour maintenir à l'intérieur dudit logement (H) ladite carte de circuit imprimé associée (D).

2. La configuration de montage de la revendication 1, dans laquelle ledit couvercle (1) comprend un composant optique (14) et une structure support (10), et dans laquelle ladite structure support (10) porte lesdits éléments de rétention (12A) et lesdits éléments de maintien (12B).

3. La configuration de montage de la revendication 2, dans laquelle ladite structure support (10) comprend une structure de forme annulaire.

4. La configuration de montage de la revendication 3, dans laquelle lesdits éléments de rétention (12A) et lesdits éléments de maintien (12B) sont configurés en groupes angulairement répartis sur ladite structure support de forme annulaire (10).

5. La configuration de montage de la revendication 4, dans laquelle chaque groupe desdits éléments de rétention (12A) et desdits éléments de maintien (12B) comprend un élément de maintien relativement plus long (12B) interposé entre une paire d'éléments de rétention relativement plus courts (12A).

6. La configuration de montage de l'une des revendications 3 à 5, dans laquelle chacun desdits éléments de maintien (12B) possède une gorge à l'ouverture d'extrémité distale vers l'intérieur de ladite structure support de forme annulaire (10).

7. La configuration de montage de l'une des revendications 3 à 6, dans laquelle chacun desdits éléments de rétention (12A) possède à l'extrémité distale une formation en forme de crochet pointant vers l'extérieur de ladite structure support de forme annulaire (10).

8. La configuration de montage de l'une des revendications 2 à 7, dans laquelle ladite structure support (10) et ledit composant optique (14) présentent des formations complémentaires pour leur couplage mutuel.

9. La configuration de montage de l'une des revendications 1 à 7, dans laquelle ledit couvercle est une pièce unique de matière plastique.

10. La configuration de montage de l'une des revendications précédentes, dans laquelle lesdits éléments de rétention (12A) et/ou lesdits éléments de maintien (12B) sont configurés en tant que ressorts de flexion pour absorber des tolérances de production éventuelles.

11. Un dispositif d'éclairage, dans lequel ledit dispositif d'éclairage comprend une source lumineuse (L) et ladite carte de circuit imprimé associée (D) montée dans la configuration de montage de l'une des revendications 1 à 10, où ladite carte de circuit imprimé associée (D) est montée dans ledit ensemble d'éléments de maintien (12B) dudit couvercle (1), et où ladite source lumineuse est montée au fond dudit réflecteur (R).

12. Le dispositif d'éclairage de la revendication 11, dans lequel ledit couvercle (1) est configuré pour exercer une pression sur ledit réflecteur (R) lorsque ledit couvercle (1) est couplé audit boîtier (H) au moyen dudit ensemble d'éléments de rétention (12A), et dans lequel ledit réflecteur (R) sollicite quant à lui ladite source lumineuse (L) contre ledit boîtier (H), procurant ainsi un couplage thermique entre ladite source lumineuse (L) et ledit boîtier (H).

13. Le dispositif d'éclairage de l'une ou l'autre des revendications 11 ou 12, dans lequel ladite source lumineuse (L) est un module LED, et dans lequel ladite carte de circuit imprimé associée (D) contient un pilote électronique pour ledit module LED.

14. Le dispositif d'éclairage de la revendication 13, dans lequel ledit module LED est monté sur une carte de circuit imprimé possédant un coeur métallique afin d'améliorer le couplage thermique.

15. Un procédé d'obtention d'une configuration de montage pour une source lumineuse (L) à laquelle est associée une carte de circuit imprimé (D), le procédé comprenant :

- la réalisation sur un boîtier (H) d'une ouverture de sortie pour la lumière en provenance de ladite source (L),
- le positionnement dans ledit boîtier d'un réflecteur (R) pour réfléchir la lumière provenant de ladite source (L) en direction de ladite ouverture,
- la mise en place d'un couvercle au moins partiellement transparent (1) pour fermer ladite ouverture dudit boîtier (H), et
- la réalisation sur ledit couvercle (1) d'un ensemble d'éléments de rétention (12A) pour retenir ledit couvercle (1) audit boîtier (H),
**caractérisé en ce que** le procédé inclut la réalisation sur ledit couvercle (1) d'un ensemble d'éléments de maintien (12B) pour maintenir à l'intérieur dudit boîtier (H) ladite carte de circuit imprimé associée (D).

**Fig. 1**

**Fig. 2**

**Fig. 3**

**Fig. 4**

**EP 2 177 824 B1**

**Patent documents cited in the description**

- EP 1950491 A
- DE 8606427 U1

- EP 1710495 A